# EUROPEAN PATENT APPLICATION

(11) **EP 3 199 321 A1**
(43) Date of publication of application: **02.08.2017**
(21) Application number: 15843765.7
(22) Date of filing: 25.09.2015
(51) Int. Cl.: B29C 45/53, B29C 65/70

(54) **MELTING VESSEL, INJECTION DEVICE USING SAME, INJECTION MOLDING AND METHOD FOR MANUFACTURING SAME, AND METHOD FOR MANUFACTURING INTER-MEMBER JUNCTION MATERIAL**

(30) Priority: 25.09.2014 JP 2014194922
(71) Applicant: Century Innovation Corporation, Tokyo 104-0033 (JP)
(72) Inventor: KAWASAKI, Hiroaki, Tokyo 104-0033 (JP)
(74) Representative: Schwabe - Sandmair - Marx
(86) International application number: PCT/JP2015/077050
(87) International publication number: WO 2016/047732

(57) **Abstract**

The present invention provides a melter that can improve melting efficiency compared to prior arts and an injection apparatus with improved injection efficiency. A melter (3) according to the present invention includes a through hole (10), one opening of the through hole (10) is an inflow port (10a) and the other opening is an outflow port (10b), an inner wall surface of the through hole (10) is formed of an inclined surface so that the opening becomes narrower from the inflow port (10a) to the outflow port (10b) of the through hole (10), an opening width (T1) of the inflow port (10a) is 4.1 mm to 10 mm and an opening width (T2) of the outflow port (10b) is 1.0 mm to 4.5 mm.

## Description

### Technical Field

The present invention relates to melter for melting an injection material and an injection apparatus using the same, an inj ection molded product and a manufacturing method therefor, and a manufacturing method for an inter-member joining body.

### Background Art

As shown in the following patent literature, a melter is provided in an injection apparatus. A plurality of through holes (melting holes) are provided in the melter and an injection material is melted through the through holes.

A nozzle is disposed on an outflow port side of the melter and an injection material melted by the melter (molten resin) is ejected from the nozzle to the outside. By sending the molten resin injected from the nozzle to a metal die, it is possible to manufacture an injection molded product or form an inter-member joining body using the molten resin.

### Citation List

### Patent Literature

Patent Literature 1
   Japanese Patent Publication No.5527706
Patent Literature 2
   Japanese Patent Publication No.5527705

### Summary of Invention

### Technical Problem

However,conventionally,when unmeltedresiduesare produced from the injection material and the unmelted residues are accumulated in the melter, the through holes are clogged or the unmelted residues are ejected from the nozzle to the outside as they are, resulting in a problem of causing quality degradation of the injection molded product.

The present invention has been implemented to solve the above-described problem and it is an object of the present invention to provide a melter capable of improving melting efficiency compared to prior arts and an injection apparatus with improved injection efficiency.

It is another object of the present invention to provide an injection molded product of excellent quality and a manufacturing method therefor and a manufacturing method for an inter-member joining body using the injection apparatus according to the present invention.

### Solution to Problem

As a result of intensive studies to achieve the above-described objects, the present inventor found that, in order to improve melting efficiency, sizes of an inflow port side and an outflow port side of a through hole formed in a melter should be optimized first and an inclined shape of an inner wall surface of the through hole formed in the melter should then be optimized, and came to complete the present invention.

That is, a melter according to the present invention includes a through hole, in which one opening of the through hole is an inflow port and the other opening is an outflow port, an inner wall surface of the through hole is formed of an inclined surface so that the opening becomes narrower from the inflow port to the outflow port of the through hole, and an opening width of the inflow port is 4.1 mm to 10 mm and an opening width of the outflow port is 1.0 mm to 4.5 mm.

In the present invention, the inner wall surface of the through hole is formed of an inclined surface so that the opening becomes narrower from the inflow port to the outflow port of the through hole. Since the opening of the inflow port is greater than that of the outflow port in this way, an injection material can be easily guided to the inflow port of the through hole. The injection material is melted in the melter and guided in an outflow port direction. In this case, since the inner wall surface of the through hole is an inclined surface, the injection material is more easily smoothly guided in the outflow port direction. Making the opening of the outflow port narrower than that of the inflow port makes it possible to increase a heat quantity, air tightness and an extrusion pressure on the outflow port side, and cause the molten injection material to flow out from the outflow port appropriately. In the present invention, the opening width of the inflow port is set to 4.1 mm to 10 mm and the opening width of the outflow port is set to 1.0 mm to 4.5 mm. By restricting respective sizes of the opening widths of the inflow port and the outflow port to within a predetermined range in the configuration in which the through hole is inclined from the inflow port to the outflow port, it is possible to suppress unmelted residues of the injection material compared to the prior arts. Therefore, it is possible to suppress clogging of the through hole caused by unmelted residues and defects of the unmelted residues being ejected to the outside via the melter as they are, and improve melting efficiency. Furthermore, the ability to suppress clogging of the through hole caused by unmelted residues can achieve melter life prolongation.

In the present invention, the opening width of the inflow port is preferably 4.1 mm to 6 mm and the opening width of the outflow port is preferably 1.0 mm to 2.9 mm. The lower limit value of the opening width of the outflow port is more preferably 1.6 mm.

In the present invention, the length from the inflow port to the outflow port of the through hole is preferably 30 mm to 200 mm. This length allows excellent melting efficiency to be obtained. That is, when the length is too small, the melting path from the inflow port to the outflow port becomes shorter, making unmelted residues of the injection material more likely to be generated. When the length is too large, the inner wall surface is brought closer to a vertical surface, reducing increases in the heat quantity, air tightness and extrusion pressure on the outflow port side relative to those on the inflow port side and making the melting efficiency more likely to deteriorate. Too large a length leads to an increase in size of the melter. In contrast, in the present invention, the opening width of the inflow port is set to 4.1 mm to 10 mm, the opening width of the outflow port is set to 1.0 mm to 4.5 mm, and in addition, the length of the through hole is set to 30 mm to 200 mm, thus making it possible to further prevent generation of unmelted residues of the injection material and more effectively improve melting efficiency.

In the present invention, a gentle inclined surface continuous to the inclined surface and more gently inclined than the inclined surface is preferably formed on the inflow port side.

The melter of the present invention includes a through hole, in which one opening of the through hole is an inflow port and the other opening is an outflow port, the inner wall surface of the through hole is formed of an inclined surface so that the opening becomes narrower from the inflow port to the outflow port of the through hole, and an inclined surface continuous to the inclined surface and more gently inclined than the inclined surface is formed on inflow port side.

In the present invention, the inner wall surface of the through hole is formed so that the opening becomes narrower from the inflow port to the outflow port of the through hole. Since the inflow port has a greater opening than the outflow port, the injection material can be more easily guided into the inflow port of the through hole. The injection material is melted in the melter and guided in the outflow port direction, but since the inner wall surface of the through hole is an inclined surface, the injection material is more easily smoothly guided in the outflow port direction, and by making the opening on the outflow port narrower than the opening of the inflow port, it is possible to increase the heat quantity, air tightness and extrusion pressure on the outflow side and appropriately cause the molten injection material to flow out from the outflow port. In the present invention, a gentle inclined surface is adopted for the inflow port side. By adopting a mode in which a gentle inclination is changed to an abrupt inclination from the inflow port to the outflow port, it is possible to make the opening width on the inflow port side easily expandable, more easily guide the injection material into the inflow port of the through hole, and increase melting efficiency on the outflow part side. An effect of the injection material being finely cut at the edge of the inflow port can also be expected, and as a result, it is possible to reduce the amount of the injection material remaining on the inflow port surface of the melter and suppress unmelted residues of the injection material. As described above, according to the configuration of the present invention, it is possible to improve melting efficiency and achieve life prolongation.

In the present invention, when the opening angle of the inclined surface is assumed to be θ1 and the opening angle of the gentle inclined surface is assumed to be θ2, it is preferable to satisfy a relationship of θ1<θ2≤120°. In the present invention, the θ2 is more preferably 30° to 120°. In the present invention, the θ2 is further preferably 30° to 90°. In the present invention, the θ2 is most preferably 30° to 60°. When the opening angle θ2 becomes smaller than 30°, the difference from the opening angle θ1 becomes smaller and the effect of suppressing the injection material that remains on a surface of the inflow port of the melter and fine-cutting effect on the injection material deteriorate. On the other hand, when the opening angle θ2 becomes greater than at least 120°, the gentle inclined surface provided on the inflow port side becomes too gentle, causing the injection material to be more likely to be deposited at some midpoint of the gentle inclined surface on the inflow port side, leading to an increase in size of the melter. On the other hand, the present invention restricts the opening angle θ2 to within the above-described range, and can thereby more effectively improve melting efficiency while securing miniaturization of the melter.

An injection apparatus according to the present invention includes a cylinder, any one melter described above and disposed in the cylinder, a nozzle part disposed on the outflow port side of the melter, heating means for heating the melter, and pressurizing means for ejecting the injection material melted by the melter from the nozzle part to the outside. Since the present invention can suppress generation of unmelted residues of the injection material, it is possible to suppress clogging due to accumulation of unmelted residues in the through hole or unmelted residues emitted after passing through the melter. As a result, it is possible to send an appropriately melted injection material from the melter to the nozzle part, add an appropriate injection pressure to the nozzle part and improve the injection efficiency.

The injection apparatus according to the present invention is preferably fully automatically operated.

An injection molded product according to the present invention is formed using the above-described injection apparatus. In the present invention, the injection molded product is preferably selected from engineering plastic or super engineering plastic. In the present invention, the injection molded product is preferably molded using polyether ether ketone.

A method for manufacturing an injection molded product according to the present invention forms the injection molded product using the above-described injection apparatus. A method for manufacturing an inter-member joining body forms the joined body using the above-described injection apparatus. The present invention can form an injection molded product and an inter-member joining body of excellent quality.

### Advantageous Effects of Invention

The first melter according to the present invention includes a through hole, one opening of the through hole is an inflow port and the other opening is an outflow port, the inner wall surface of the through hole is formed of an inclined surface so that the opening becomes narrower from the inflow port to the outflow port of the through hole, the opening width of the inflow port is 4.1 mm to 10 mm and the opening width of the outflow port is 1.0 mm to 4. 5 mm. In such a configuration in which the through hole is inclined from the inflow port to the outflow port, it is possible to suppress unmelted residues of the injection material compared to the prior arts by restricting the respective opening widths of the inflow port and the outflow port to within a predetermined range. Therefore, it is possible to suppress clogging of the through hole caused by unmelted residues, the unmelted residues passing through the melter, improve the melting efficiency and achieve life prolongation.

Furthermore, the second melter according to the present invention includes a through hole, one opening of the through hole is an inflow port and the other opening is an outflow port, the inner wall surface of the through hole is formed of an inclined surface so that the opening becomes narrower from the inflow port to the outflow port of the through hole, and a gentle inclined surface continuous to the inclined surface and more gently inclined than the inclined surface is formed on the inflow port side. By providing such a gentle inclined surface on the inflow port side, it is possible to make it easier to widen the opening width on the inflow port side and make it further easier to guide the injection material into the inflow port of the through hole. Furthermore, it is possible to prevent creation of a flat part on the inflow port surface of the melter and form sharp edges between the respective inflow ports. Therefore, an effect that the injection material will be fine-cut at the edges of the inflow ports can be expected and as a result, it is possible to reduce the amount of the injection material that remains on the inflow port surface of the melter. As described above, according to the configuration of the present invention, it is possible to improve the melting efficiency and achieve life prolongation.

The injection apparatus according to the present invention includes the above-described melter and can thereby improve injection efficiency.

The injection molded product and the inter-member joining body according to the present invention are formed using the above-described injection apparatus and it is thereby possible to form an injection molded product and an inter-member joining body.

### Brief Description of Drawings

FIG. 1 is a schematic cross-sectional view of an injection apparatus according to the present embodiment;
FIG. 2 is a schematic cross-sectional view of the injection apparatus illustrating a state in which resin pellets are supplied to the injection apparatus shown in FIG. 1;
FIG. 3 is a schematic cross-sectional view for describing a joining step of joining members using the injection apparatus according to the present embodiment;
FIG. 4 is a schematic cross-sectional view for describing an injection molded product manufactured in an injection molding step using the injection apparatus according to the present embodiment;
FIG. 5 is a perspective view of a melter according to the present embodiment;
FIG. 6 is a longitudinal cross-sectional view of the melter as the first embodiment appearing when the melter is cut along a line A-A shown in FIG. 5 in a height direction;
FIG. 7 is a longitudinal cross-sectional view of a melter as a second embodiment appearing when the melter is cut along the line A-A shown in FIG. 5 in the height direction;
FIG. 8 is a schematic cross-sectional view of an injection apparatus according to an embodiment different from that in FIG. 1, illustrating a state in which resin pellets are supplied;
FIG. 9 is a schematic cross-sectional view of the injection apparatus illustrating a state in which the melter which can move in a vertical direction (reciprocating movement) is caused to move upward from the state in FIG. 8; and
FIG. 10 is a schematic cross-sectional view of the injection apparatus, illustrating a state in which the melter is caused to move downward from the state in FIG. 9 and molten resin is ejected to the outside from the nozzle part.

### Description of Embodiments

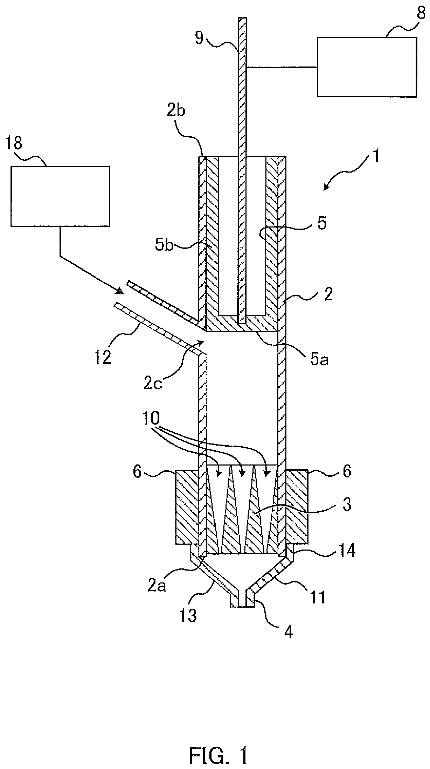

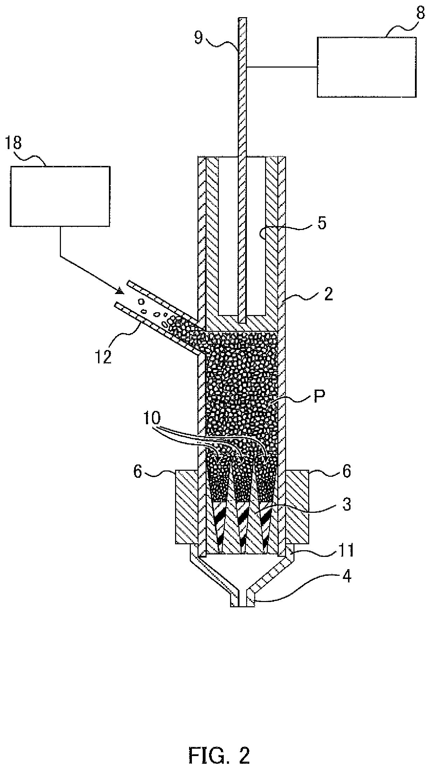

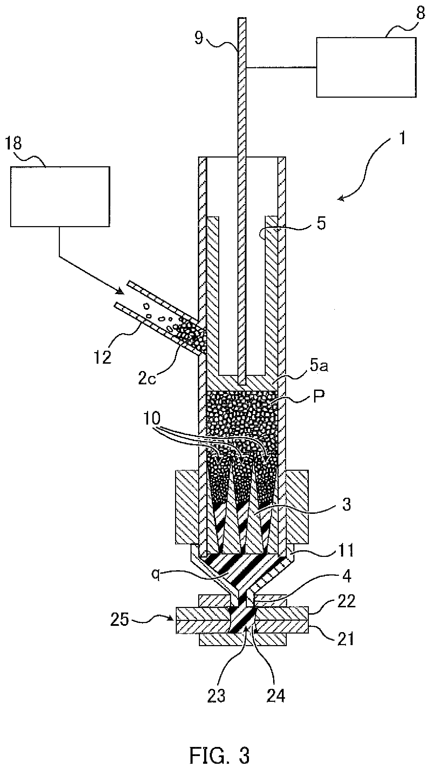

Hereinafter, embodiments of the present invention will be described in detail with reference to the accompanying drawings. FIG. 1 is a schematic cross-sectional view of an injection apparatus according to the present embodiment. FIG. 2 is a schematic cross-sectional view of the injection apparatus, illustrating a state in which resin pellets are supplied to the injection apparatus shown in FIG. 1. FIG. 3 is a schematic cross-sectional view for describing a joining step of joining members using the injection apparatus of the present embodiment.

An injection apparatus 1 is constructed of a cylinder 2, a melter 3 disposed in the cylinder 2, a nozzle part 4 located at a distal end of the injection apparatus 1, heating means for heating the melter 3, and pressurizing means forpressurizingmolten resin and ejecting the resin to the outside from the nozzle part 4.

The melter 3 shown in FIG. 1 is fixed to the inside of the cylinder 2. The melter 3 is disposed on a distal end 2a side of the cylinder 2 (lower side in FIG. 1). A plunger 5 is provided in the cylinder 2 as the pressurizing means. In FIG. 1, the plunger 5 is disposed closer to a rear end 2b side of the cylinder 2 than the melter 3 (upper side in FIG. 1). As shown in FIG. 1, a predetermined distance is provided between the melter 3 and the plunger 5. The plunger 5 is supported by drive means so as to be movable in a vertical direction (reciprocating movement). The vertically movable plunger 5 is located at a most retracted position in the rear end direction of the cylinder 2 in FIG. 1 and FIG. 2, and FIG. 3 illustrates a state in which the plunger 5 is moved from the state in FIG. 2 toward the distal end direction of the cylinder 2 (downward direction in FIG. 1).

The cylinder 2 is formed into an elongated cylindrical shape having substantially constant inner diameter and outer diameter from the distal end 2a to the rear end 2b, but the shape thereof is not particularly limited. That is, the shape of the cylinder 2 is not particularly limited as long as the cylinder 2 has a mode in which the melter 3 can be fixed in the cylinder 2 and the plunger 5 as the pressurizing means can be moved in the vertical direction. For example, the cylinder 2 may have a square shape whose interior is hollow.

The material of the cylinder 2 is not particularly limited, but iron or stainless steel with a large content of iron or the like is preferably used.

As shown in FIG. 1, the cylinder 2 is provided with a pellet supply port 2c. The pellet supply port 2c is formed into a hole shape communicating with a space in the cylinder so that the pellet supply port 2c is located between the melter 3 fixed on the distal end 2a side of the cylinder 2 and the plunger 5 in a state in which it is retracted toward the rear end 2b direction of the cylinder 2 (upward direction in the figure). A cylindrical supply pipe 12 is connected to the pellet supply port 2c.

A top end of the supply pipe 12 communicates with a storage part 18 that stores many resin pellets (injection material) and resin pellets are supplies from the storage part 18 to the pellet supply port 2c via the supply pipe 12. The storage part 18 is, for example, a hopper. The storage part 18 is provided with a screw conveyance or pneumatic apparatus, and can also forcibly charge resin pellets into the supply pipe 12. Note that without providing any storage part, resin pellets may also be supplied through a pipe from a remote place through screw conveyance or pneumatic transportation.

The plunger 5 is constructed of a pressing part 5a and a cylindrical outer circumferential side face part 5b provided around the pressing part 5a and formed toward the rear end 2b direction of the cylinder 2. As shown in FIG. 1, the size of the pressing part 5a coincides with the inner diameter of the cylinder 2 and a spatial region of the cylinder 2 from the pressing part 5a to the rear end 2b of the cylinder 2 is closed with the plunger 5. Note that rigid heat-resistant synthetic resin is fixed to the front face of the pressing part 5a (undersurface side in the figure) as needed. This makes it possible to thermally insulate the melter 3 from the plunger 5 to prevent the plunger 5 from depriving the melter 3 of heat and prevent the plunger 5 from being heated to transmit heat to a drive section 8.

The plunger 5 is connected to the drive section 8 and the plunger 5 is supported so as to be able to move in the vertical direction (reciprocating movement) inside the cylinder 2 by a drive force of the drive section 8. Note that as shown in FIG. 1, a drive transmission shaft (rod) 9 is disposed between the drive section 8 and the plunger 5, and the drive section 8 and the drive transmission shaft 9 together constitute "drive means." For example, the drive section 8 is a motor drive section and the drive transmission shaft 9 is a rack shaft, a pinion gear (not shown) is disposed between the motor drive section and the rack shaft, and the drive means is constructed of the motor drive section, the rack shaft and the pinion gear. Note that the cross-sectional shape of the drive transmission shaft (rod) 9 is, for example, circular, but the shape is not limited.

As shown in FIG. 1, heating means 6 for heating the melter 3 is provided around the cylinder 2. Thus, the heating means 6 is a component to heat the melter 3 from the outer circumferential surface of the cylinder 2 and is preferably formed to be cylindrical so that thermal conductivity to the melter 3 improves. The heating means 6 is provided at a position facing the melter 3 (so as to surround the melter 3).

For example, the heating means 6 is made up of an IH heater or the like configured like winding. To be more specific, the heating means 6 is preferably an electromagnetic induction apparatus, that is, IH (induction heating) coil, and is an IH coil wound around a resin or ceramic heat insulating material coil bobbin. Note that, instead of using the bobbin, both ends of the heating means 6 may be held by a holder of a heat insulating material. Furthermore, a band heater may also be used as another type of the heating means 6. Furthermore, the heating means 6 is not limited to the above-described one, but any means may be used if it is another heating apparatus available to the present invention. Note that the cylinder 2 is preferably provided with a thermocouple so as to be able to adjust the temperature of the cylinder 2 to a set value.

Although details of the melter 3 will be described later, the melter 3 is provided with a plurality of through holes (melting holes) 10 in the height direction. The shape of the outer circumferential surface of the melter 3 matches the shape of the inner wall surface of the cylinder 2 so that the entire outer circumferential surface of the melter 3 comes into contact with the inner wall surface of the cylinder 2. Therefore, if the inner wall surface (hollow part) of the cylinder 2 is shaped like a column, the outer circumferential surface of the melter 3 is also shaped like a column having the same diameter.

As shown in FIG. 1, an opening on the top surface side of the melter 3 of each through hole 10 is an inflow port and an opening on the undersurface side of the melter 3 of each through hole 10 is an outflow port.

As the material of the melter 3, metal which has a large heat capacity and excellent heat conduction or excellent heat-resistance is suitable. To be more specific, copper, beryllium copper, brass, stainless steel, gold, chromium steel, nickel chromium steel, molybdenum steel, tungsten steel or the like is used, but the material is not particularly limited. Forming the melter 3 to a size, which will be described later, can effectively suppress unmelted residues of the resin pellets P (injection material).

As shown in FIG. 1, a head part 11 provided with the nozzle part 4 is provided at the distal end 2a of the cylinder 2. The head part 11 is constructed of the nozzle part 4, a funnel part 13 and a connection part 14. The head part 11 is connected to the cylinder 2 via the connection part 14. A material with good heat conduction is suitable for the head part 11 and, to be more specific, beryllium copper or copper is preferable.

As shown in FIG. 2, many solid resin pellets (injection material) P are supplied from the storage part 18 into the cylinder 2 via the supply pipe 12.

Although the material of the resin pellets P is not particularly limited, various types of resin such as polypropylene (PP), ABS, polycarbonate (PC)/ABS, polyacetal (POM), vinyl chloride, polyolefin and nylon are preferably applicable. In the present invention, engineering plastic or super engineering plastic can be used as resin of the resin pellets P. Note that each resin pellet P has a diameter or a long side in size of on the order of 1 to 1.5 mm.

When the resin pellets P reach an upper part of the melter 3, the resin pellets P enter each through hole (melting hole) of the melter 3 from the inflow port (top surface in the figure). The resin pellets P which have entered each through hole 10 are pressed by resin pellets P that enter later toward the outflow port side of each through hole 10 (undersurface side in the figure). In this case, the melter 3 is kept at a temperature at which the resin pellets P are melted via the heating means 6.

As shown in FIG. 2, the resin pellets P that have flown into each through hole 10 are partially softened by heat from the melter 3.

As shown in FIG. 3, the drive means is driven to drive the plunger 5 as the pressurizing means toward the direction of the nozzle part 4 (downward direction in the figure). This causes all the many resin pellets P located between the inflow port side of the melter 3 (top surface in the figure) and the undersurface of the pressing part 5a of the plunger 5 to be pressed against each other. As shown in FIG. 3, the pellet supply port 2c is closed with the plunger 5 due to the downward movement of the plunger 5.

As the plunger 5 moves, the resin pellets P that have flown into each through hole 10 of the melter 3 are also pressurized. Thus, the resin pellets P are pressurized and placed in an airtight condition in each through hole 10, further melted by heat from the melter 3 and molten resin q flows from the outflow port (undersurface side) of the melter 3 into the head part 11. The molten resin q is pressurized while being kept in the highly airtight condition and ejected to the outside from the nozzle part 4.

In FIG. 3, for example, the nozzle part 4 is located in a connection spatial part 23 provided between members 21 and 22, and the connection spatial part 23 is filled with the molten resin q ejected from the nozzle part 4. The charged molten resin q is then cooled to become solid and becomes joining resin 24 that joins the members 21 and 22. Using the injection apparatus 1 of the present embodiment in this way, it is possible to obtain a joined body 25 provided with the joining resin 24 that joins the members 21 and 22. An injection time of the molten resin q by the injection apparatus 1 is several hundreds of milliseconds to several seconds (e.g., on the order of one second). Though not shown, when the joined body 24 is formed, the molten resin q is charged between the members 21 and 22 appropriately using a die called an "adapter."

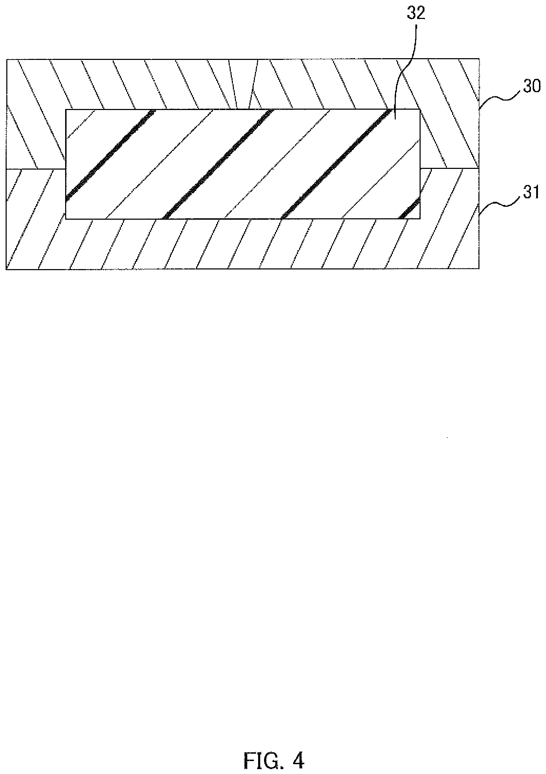

Alternatively, it is possible to inject molten resin into an upper mold 30 and a lower mold 31 of a metal die, silicon die or resin die using the injection apparatus 1 of the present embodiment, and thereby manufacture an injection molded product 32 as shown in FIG. 4.

Next, the melter 3 according to the present embodiment will be described. As has already been described, the melter 3 is provided with a plurality of through holes 10. Themelter 3 is provided with a function for passing the resin pellets P through each through hole 10 and melting the resin pellets P. In this case, if unmelted residues of the resin pellets P are produced, this is likely to cause clogging in the through hole 10. Furthermore, when unmelted residues of the resin pellets P are discharged from the melter 3, this may result in clogging in the nozzle part 4 located on the distal end side of the melter 3, affecting quality of the inter-member joining body and the resin molded product. For this reason, the melter 3 is required to have a mode capable of effectively preventing unmelted residues of the resin pellets P when generating molten resin.

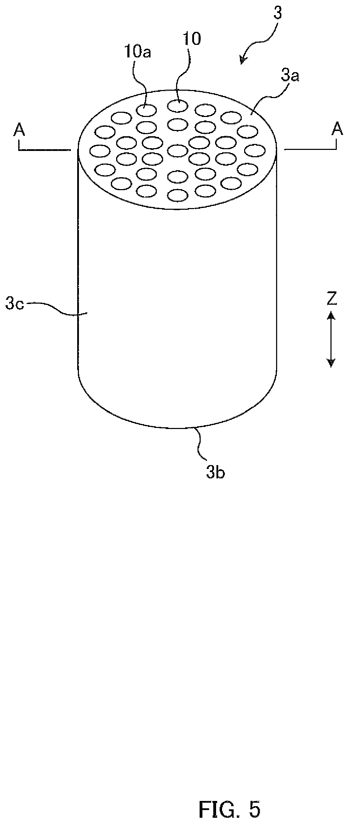

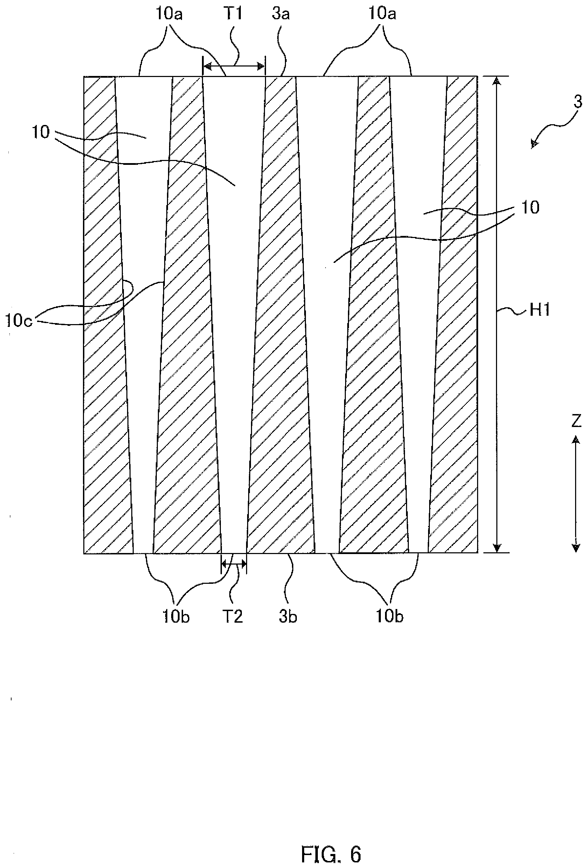

FIG. 5 is a perspective view of the melter according to the present embodiment. FIG. 6 is a longitudinal cross-sectional view of the melter as the first embodiment appearing when the melter is cut along a line A-A in a height direction shown in FIG. 5.

As shown in FIG. 5, the melter 3 has a columnar shape, but as has already been described, the shape of the outer circumferential surface of the melter 3 can be changed as appropriate according to the shape of the inner wall surface of the cylinder 2.

The melter 3 has a top surface 3a, an undersurface 3b and an outer circumferential surface 3c located between the top surface 3a and the undersurface 3b. The top surface 3a and the undersurface 3b are surfaces facing each other and parallel to each other.

As shown in FIG. 5, a plurality of through holes 10 provided from the top surface 3a to the undersurface 3b (toward the height direction (Z)) are formed in the melter 3. An opening of each through hole 10 in the top surface 3a is an inflow port 10a and an opening in the undersurface 3b is an outflow port 10b (see FIG. 6).

Although the number of through holes 10 can be set arbitrarily, the number of through holes 10 is preferably plural. Furthermore, the number of through holes 10 may be preferably set so that the ratio of the total area of the inflow ports 10a of the respective through holes 10 to the area of the top surface 3a (inflow port surface) of the melter 3 becomes, for example, 50% or higher.

Although the plurality of through holes 10 may be arranged regularly or randomly, it is possible to increase melting efficiency by uniformly distributing the respective through holes 10 over the entire top surface (inflow port surface) 3a and undersurface (outflow port surface) 3b.

FIG. 6 is a longitudinal cross-sectional view of the melter as the first embodiment appearing when the melter is cut along the line A-A shown in FIG. 5 in the height direction.

As shown in FIG. 6, an inner wall surface 10c of the through hole 10 is formed of an inclined surface so that the opening gradually becomes narrower from the inflow port 10a to the outflow port 10b in each through hole (melting hole) 10. The respective through holes 10 are preferably formed in a direction parallel to the height direction (Z) from the inflow port 10a to the outflow port 10b. Each through hole 10 is preferably frustum-shaped and to be more specific, truncated cone or truncated pyramid may be presented. In FIG. 5 and FIG. 6, each through hole 10 has a truncated cone shape.

As shown in FIG. 6, the inflow port 10a of each through hole 10 has an opening width of T1 and the outflow port 10b of each through hole 10 has an opening width of T2. The opening width T1 is greater than the opening width T2. When each through hole 10 has a truncated cone shape, the opening width T1 and the opening width T2 can be calculated as opening diameters. When the through hole 10 has a truncated pyramid shape, the opening width T1 and the opening width T2 represent the widths of the longest straight lines of the sides or diagonals.

In FIG. 6, the opening width T1 is adjusted to within a range of 4.1 mm to 10 mm and the opening width T2 is adjusted to within a range of 1.0 mm to 4.5 mm. In the present specification, notations "lower limit value to upper limit value" is assumed to include a lower limit value and an upper limit value.

The resin pellets P are caused to flow from the inflow port 10a of each through hole 10 of the melter 3 into the melter 3 shown in FIG. 6, heated, pressurized and melted, and molten resin is caused to flow out from the outflow port 10b of each through hole 10.

As shown in FIG. 6, the inflowport 10a of each through hole 10 is opened greater than the outflow port 10b. For this reason, the resin pellets P (injection material) can be more easily guided into the inflow port 10a of the through hole 10. Since the opening width T1 of the inflow port 10a is adjusted to within the range of 4.1 mm to 10 mm, it is possible to substantially cover sizes of various commercially available resin pellets and appropriately guide the resin pellets P into the inflow port 10a. Furthermore, the resin pellets P are melted in the melter 3 and discharged to the outside from the outflow port 10b, but since the inner wall surface 10c of the through hole 10 is an inclined surface, it is possible to smoothly guide the molten resin toward the direction of the outflow port 10b and by making the opening width T2 of the outflow port 10b narrower than the opening width T1 of the inflow port 10a, it is possible to increase the heat quantity and extrusion pressure on the outflow port 10b side and cause the molten resin to flow out from the outflow port 10b appropriately. Then, in the embodiment shown in FIG. 6, the opening width T1 of the inflow port 10a is set to 4.1 mm to 10 mm and the opening width T2 of the outflow port 10b is set to 1.0 mm to 4.5 mm. Thus, in the configuration in which the through hole 10 is inclined from the inflow port 10a to the outflow port 10b, by restricting sizes of the respective opening widths of the inflow port 10a and the outflow port 10b to within a predetermined range, it is possible to suppress unmelted residues of resin pellets P (injection material) compared to the prior arts.

From above, it is possible to suppress clogging or the like of the through hole 10 caused by unmelted residues of resin pellets, improve melting efficiency and achieve life prolongation of the melter 3, and by extension, the injection apparatus 1. Here the "melting efficiency" can be defined by an amount of injection from the nozzle part 4 of the injection apparatus 1 and a state in which a predetermined amount of injection can be obtained for a predetermined period of time can be said to be a state with excellent melting efficiency. Alternatively, this state refers to a state in which unmelted residues of resin pellets accumulated in the melter 3 or unmelted residues flowing out from the melter 3 are measured for a predetermined period of time and the amount of unmelted residues is confined within a range of a predetermined value (preferably 0).

The present inventor adjusted the opening widths T1 and T2 within the above-described ranges, used polypropylene (PP) for the resin pellets P, set the cylinder temperature to approximately 230°C and measured to confirm whether or not unmelted residues of resin pellets P would be generated. As a result, it was found that unmelted residues of resin pellets P were not generated. It was also found that the amount of ejection from the nozzle part 4 of the injection apparatus 1 was on the order of several g/sec in continuous usage, namely substantially constant. It was also confirmed that no unmelted residues of resin pellets were produced even when the cylinder temperature was set to approximately 190°C.

When similar experiments were tried using ABS, polycarbonate (PC)/ABS, polyacetal (POM), vinyl chloride, polyolefin or nylon in addition to polypropylene (PP) as resin pellets P, it was confirmed that no unmelted residues of resin pellets P were generated and it was possible to generate molten resin appropriately as in the case of polypropylene (PP).

A length H1 from the inflow port 10a to the outflow port 10b of the through hole 10 is preferably 30 mm to 200 mm. The length H1 is defined by the size in a direction parallel to the height direction (Z) from the inflow port 10a to the outflow port 10b. The above-described experiments were also conducted on assumption that the length H1 of each through hole 10 would fall within a range of 30 mm to 200 mm. It is thereby possible to obtain excellent melting efficiency. That is, when the length is too small, the melting path from the inflow port to the outflow port becomes shorter, increasing the possibility that unmelted residues of resin pellets P may be generated. On the other hand, when the length of the through hole 10 is too large, the inner wall surface of the through hole 10 becomes closer to a vertical surface than the inclined surface, causing a relative rise in the heat quantity and extrusion pressure on the outflow port 10b side with respect to the inflow port side to be more likely to decrease. In addition, when the length of the through hole 10 is too large, this leads to enlargement in size of the melter 3. The length H1 is preferably 70 mm to 150 mm.

The present embodiment appropriately adjusts the respective opening widths of the inflow port 10a and the outflow port 10b of the through hole 10 as well as the length of the through hole 10, and can thereby more effectively eliminate unmelted residues of resin pellets P and improve melting efficiency.

In the present embodiment, the opening width T1 of the inflow port 10a is preferably 4.1 mm to 6 mm. Furthermore, the opening width T2 of the outflow port 10b is preferably 1.0 mm to 2.9 mm. The lower limit value of the opening width T2 of the outflow port 10b is preferably 1.6 mm.

It was found through an experiment conducted by assuming 3 mm as the opening width T2 of the outflow port 10b that unmelted residues of resin pellets P were slightly observed. For this reason, the opening width T2 of the outflow port 10b is preferably set to 2.9 mm or less to suppress unmelted residues.

Although the opening width T1 of the inflow port 10a and the opening width T2 of the outflow port 10b of each through hole 10 may not be constant but may vary within the above-described numerical value range, setting constant opening widths T1 and T2 can make uniform the melting condition of resin pellets P passing through each through hole 10 and stably achieve high melting efficiency. Here, "constant" means that the opening width T1 of each inflow port 10a and the opening width T2 of each outflow port 10b remain within a range of variation of ±10% with respect to their respective average values.

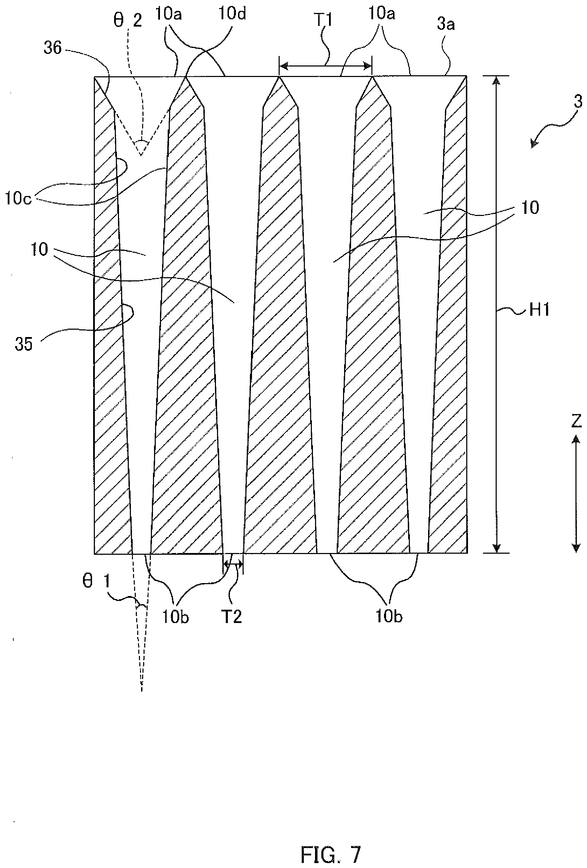

FIG. 7 is a longitudinal cross-sectional view of a melter according to a second embodiment appearing when the melter is cut along the line A-A shown in FIG. 5 in the height direction.

In the embodiment shown in FIG. 7 as well as in FIG. 6, regarding each through hole (melting hole) 10 making up the melter 3, the inner wall surface 10c of the through hole 10 is formed of an inclined surface in such a way that the opening gradually becomes narrower from the inflow port 10a to the outflow port 10b.

In the embodiment shown in FIG. 7, an inclined surface is formed in continuation to the inclined surface making up each through hole 10 on the inflow port 10a side, the inclined surface having a gentler inclination than the inclined surface. To be more specific, each through hole 10 is formed of an inclined surface (first inclined surface) 35 having an opening angle of θ1 and a gentle inclined surface (second inclined surface) 36 having an opening angle of θ2 on the inflow port 10a side. A relationship of θ1<θ2≤120° is satisfied. Note that the opening angle in FIG. 6 is also similar to the opening angle θ1, and the opening angle θ1 is defined by a relationship between the inflow port 10a and the outflow port 10b.

Here, the "opening angle" refers to an angle formed between mutually facing inclined surfaces in the cross section shown in FIG. 7 and when an angle of inclination of each inclined surface is defined as an angle from the height direction (Z), the opening angle becomes substantially twice the angle of inclination.

As shown in FIG. 7, at points at which neighboring edges 10d of the inflow port 10a of the through hole 10 come closer to each other and come into contact or nearly come into contact with each other, the edges 10d have a blade shape or blade-like shape, and when the resin pellets P are located on the edges 10d, the resin pellets P are crushed, separated apart into fine pieces, which further facilitates entries of the resin pellets P into the through hole 10 and suppresses clogging in the through hole 10.

As shown in FIG. 7, the inclined surface 35 having a steep inclination is formed from the outflow port 10b to a position close to the inflow port 10a and the gentle inclined surface 36 having a gentle inclination is formed only in the vicinity of the inflow port 10a.

Note that the inclined surface may be formed so as to have three or more stages. Note that the inclined surface is preferably formed in a two-stage inclination structure in which most of the through hole is formed of the steep inclined surface 35 and the gentle inclined surface 36 is formed only in the vicinity of the inflow port 10a.

As described above, in FIG. 7, the inner wall surface of the through hole 10 is formed of an inclined surface first so that the opening becomes narrower from the inflow port 10a to the outflow port 10b of the through hole 10. Since the opening of the inflow port 10a is greater than that of the outflow port 10b in this way, it is possible to guide the resin pellets P into the inflow port 10a of the through hole 10 more easily. The resin pellets P are melted in the melter 3 and flow out from the outflow port 10b, and since the inner wall surface of the through hole 10 is an inclined surface in this case, the resin pellets P can be smoothly guided toward the outflow port direction, and moreover by making the opening of the outflow port 10b narrower than the opening of the inflow port 10a, it is possible to increase the heat quantity and extrusion pressure on the outflow port side and cause molten resin to flow out from the outflow port 10b appropriately. In the embodiment shown in FIG. 7, the gentle inclined surface 36 is formed on the inflow port 10a side. This further makes it easier to guide the resin pellets P into the inflow port 10a of the through hole 10. It is also possible to prevent flat parts from being formed on the inflow port surface of the melter and form sharp edges between the respective inflow ports (see FIG. 7). Therefore, an effect that the resin pellets P will be fine-cut at the edges 10d of the inflow port 10a can be expected, and as a result, it is possible to reduce the amount of resin pellets P that remain on the top surface (inflow port surface) 3a of the melter 3.

Note that in the field of the melter 3, there has been conventionally no melter 3 provided with through holes including multi-stage inclined surfaces with different inclinations as shown in FIG. 7. For example, there is conventionally a configuration in which inner wall surfaces of through holes are formed of vertical surfaces (surfaces along the height direction (Z)), the inflow port portions are chamfered and inclined surfaces are provided, but in such a configuration, the effect that the entire inner wall surface of the through hole 10 is formed of inclined surfaces to reduce unmelted residues of the resin pellets P is likely to deteriorate. In contrast, in the present embodiment, all the inner wall surfaces of the through hole 10 are just formed of inclined surfaces, and in this case, the inclined surfaces are formed not with a uniform angle of inclination but inclined surfaces with a gentle inclination on the inflow port 10a side, and it is thereby possible to reduce unmelted residues of the resin pellets P while increasing the effect of introducing the resin pellets P into the inflow port 10a and the fine-cutting effect.

The present embodiment particularly satisfies a relationship of θ1<θ2≤120°. θ2 is preferably 30° to 120°. θ2 is more preferably 30° to 90°. θ2 is further preferably 30° to 60°. Note that the opening angle θ1 is determined by the sizes of the inflow port 10a and the outflow port 10b and is an angle at least smaller than the opening angle θ1. To be more specific, θ1 is on the order of 0° to 20° or on the order of 0° to 10°. When θ2 is smaller than 30°, the difference from the opening angle θ1 becomes smaller, reducing the effect of reducing resin pellets P remaining on the top surface (inflow port surface) 3a of the melter 3 or the fine-cutting effect on the resin pellets P. When the opening angle θ2 becomes greater than at least 120°, the gentle inclined surface 36 on the inflow port side becomes too gentle, causing the resin pellets P to be more easily deposited at some midpoint of the gentle inclined surface on the inflow port side and leading to an increase in size of the melter 3. In contrast, by restricting the opening angle θ2 to within the above-described range as in the case of the present embodiment, it is possible to effectively improve the melting efficiency while securing a decrease in size of the melter 3.

In the embodiment shown in FIG. 7, it is preferable to adopt the opening widths T1 and T2 of the inflow port 10a and the outflow port 10b shown in FIG. 6. That is, the opening width T1 of the inflow port 10a is preferably 4.1 mm to 10 mm and the opening width T2 of the outflow port 10b is preferably 1.0 mm to 4 . 5 mm. The opening width T1 of the inflow port 10a is preferably 4.1 mm to 6 mm and the opening width T2 of the outflow port 10b is more preferably 1.0 mm to 2.9 mm. The lower limit value of the opening width T2 is further preferably 1.6 mm.

In the present embodiment, the length H1 from the inflow port 10a to the outflow port 10b of the through hole 10 is preferably 30 mm to 200 mm. The length H1 is more preferably 70 mm to 150 mm.

The melter 3 according to the present embodiment is used not only by being fixed in the injection apparatus 1 as shown in FIG. 1 but also by being configured to move in the vertical direction (reciprocating movement) through a cylinder as will be described below.

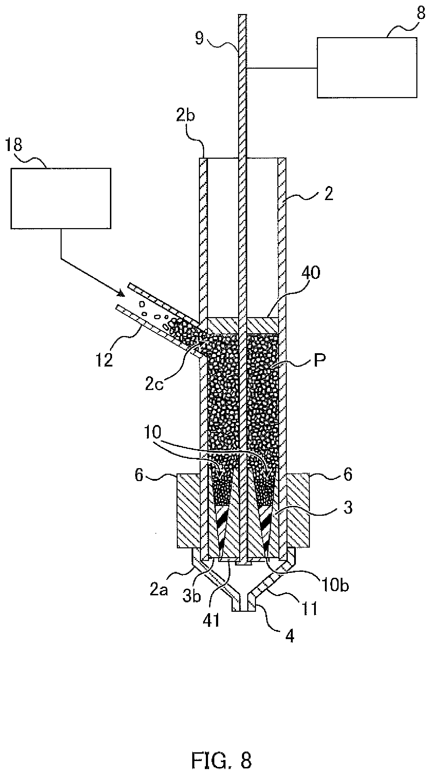

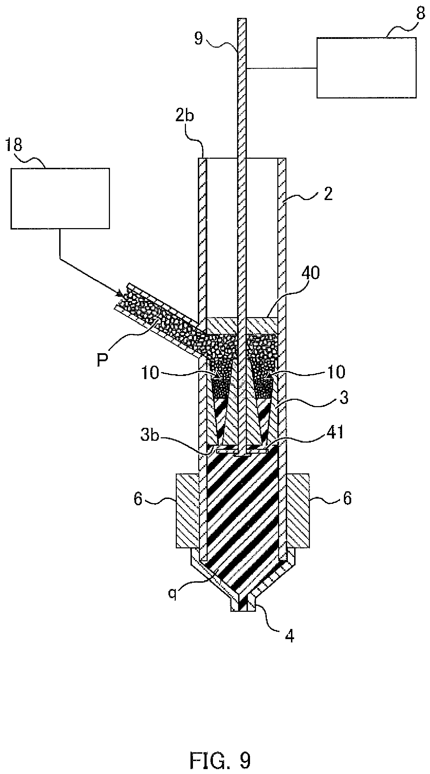

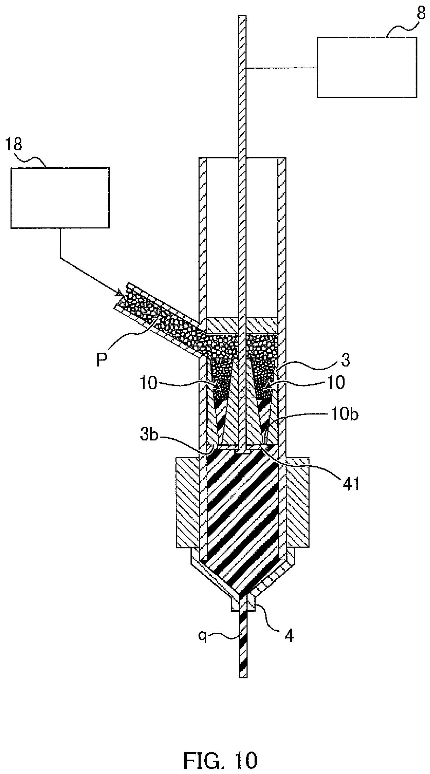

FIG. 8 is a schematic cross-sectional view of an injection apparatus according to an embodiment different from that in FIG. 1, illustrating a state in which resin pellets are supplied. FIG. 9 is a schematic cross-sectional view of the injection apparatus illustrating a state in which the melter which can move in a vertical direction (reciprocating movement) is caused to move upward from the state in FIG. 8. FIG. 10 is a schematic cross-sectional view of the injection apparatus illustrating a state in which the melter is caused to move downward from the state in FIG. 9 and molten resin is ejected to the outside from the nozzle part.

In FIG. 8 to FIG. 10, parts identical to those in FIG. 1 to FIG. 3 are assigned identical reference numerals. As shown in FIG. 8, the melter 3 and the drive section 8 are connected together via the drive transmission shaft 9. As shown in FIG. 8, a closing member 40 is provided closer to the rear end 2b side of the cylinder 2 than the melter 3. The planer area of the closing member 40 coincides with the planer area of the space surrounded by the inner wall surface in the cylinder 2. The closing member 40 is fixed in the cylinder 2.

As shown in FIG. 8, the drive transmission shaft 9 penetrates the closing member 40 and is connected to the melter 3.

As shown in FIG. 8, the drive transmission shaft 9 penetrates the melter 3 at the center, and the melter 3 and the drive transmission shaft 9 are fixed and connected together.

As shown in FIG. 8, an opening/closing member 41 is provided on the undersurface (outflow port surface) 3b side of the melter 3. The opening/closing member 41 is supported so as to close or release the outflow port of each through hole 10 of the melter 3 based on vertical movement of the melter 3. The opening/closing member 41 is always urged to the undersurface (outflow port surface) of the melter 3 using, for example, an elastic member (not shown). Operations of the drive section 8 and the drive transmission shaft 9 can release the opening/closing member 41 from the undersurface 3b of the melter 3.

The opening/closing member 41 is formed with an area smaller than that of the melter 3. A through hole may also be formed in the opening/closing member 41. In this case, the position and size of the through hole formed in the opening/closing member 41 are restricted so as not to overlap those of the outflow port 10b of each through hole 10 of the melter 3.

As shown in FIG. 8, the melter 3 is located on the distal end 2a side of the cylinder 2 and in an initial state of FIG. 8, many solid resin pellets (injection material) P are supplied into the cylinder 2 from the storage part 18 via the supply pipe 12.

The resin pellets P are introduced into each through hole (melting holes) 10 of the melter 3 from the inflow port (top surface in the figure). The resin pellets P which have entered each through hole 10 are pressed toward the outflow port side of each through hole 10 (undersurface side in the figure) by resin pellets P that enter later. In this case, the melter 3 is kept at a temperature at which the resin pellets P are melted via the heating means 6.

As shown in FIG. 8, the resin pellets P that have flown into each through hole 10 are partially softened by heat from the melter 3.

Next, as shown in FIG. 9, drive means is driven to drive the melter 3 toward the direction of the closing member 40 0 (upward direction in the figure) (melting step). This causes all the many resin pellets P located between the inflow port side of the melter 3 (top surface in the figure) and the undersurface of the closing member 40 to be pressed against each other.

As shown in FIG. 9, although the heating means 6 is fixed to the outer circumference of the cylinder 2, even when the melter 3 is caused to move to and fro in the vertical direction by the drive means, the melter 3 can keep the heat source sufficiently in terms of the heat capacity of the melter 3. Note that a heat-insulating structure is preferably provided between the melter 3 and the drive transmission shaft 9 so as to prevent heat of the melter 3 from transmitting to the drive transmission shaft 9.

The resin pellets P charged into each through hole (melting hole) 10 of the melter 3 are heated and pressurized while being kept airtight, and thus caused to start melting. In this case, the opening/closing member 41 located on the undersurface (outflow port) 3b side of the melter 3 is released from the melter 3. In this way, molten resin q that has flown downward from the melter 3 remains between the melter 3 and the nozzle part 4.

Next, in FIG. 10, the drive means is operated to cause the melter 3 to move toward the direction of the nozzle part 4 (downward in the figure) (injection steep). In this case, the opening/closing member 41 is in contact with the undersurface 3b of the melter 3, closing the outflow port 10b of each through hole 10 of the melter 3. Thus, molten resin q remaining between the melter 3 and the nozzle part 4 is pressurized while being kept airtight and ejected from the nozzle part 4. It is possible to form the inter-member joining body 25 described in FIG. 3 or form the injection molded product 32 shown in FIG. 4 using the molten resin q.

Using the melter 3 in which the opening width T1 of the inflow port 10a shown in FIG. 6 is 4.1 mm to 10 mm and the opening width T2 of the outflow port 10b is 1.0 mm to 4.5 mm or using the melter 3 in which the inflow port 10a side of each through hole 10 shown in FIG. 7 is formed of a gentle inclined surface, the injection apparatus shown in FIG. 8 to FIG. 10 can also more effectively improve melting efficiency compared to the prior arts.

The present embodiment can automate the whole operation of the injection apparatus. For example, using a table-top type robot, it is possible to achieve full automation for XYZ axis directions (X-axis, Y-axis and Z-axis are directions orthogonal to each other) of the injection apparatus. "Full automation" here includes injection operation as well as movement of the injection apparatus on a stage. Note that the case where the injection apparatus side is fixed and the stage side moves is also included in "full automation." In this case, in addition to the mode in which an injection molded product is molded using a metal die, an injection molded product may be 3D-molded through natural cooling without using any metal die, and usage such as a 3D printer is possible.

In the present embodiment, the injection molded product can be molded with resin selected from engineering plastic or super engineering plastic. For engineering plastic, polyamide, polyacetal (POM), polyethylenebutylene terephthalate (PBT) or the like is selected. For super engineering plastic, polyphenylene sulfide (PPS) or polyether ether ketone (PEEK) or the like is selected. In the present embodiment, the injection molded product can be molded without deteriorated substances mixing therewith. The injection molded product can be molded using polyether ether ketone (PEEK) in the present embodiment in particular.

When an injection molded product made of PEEK is molded using a conventional injection molded product, it has been found that deteriorated substances such as resin is accumulated in the nozzle and the deteriorated substances are mixed with the molded product (solidified molten resin). Note that a nozzle formed of an iron/chromium-based material was used as the conventional injection apparatus.

In contrast, it has been found in the present embodiment that when an injection molded product formed of PEEK was molded using an injection apparatus whose melter and nozzle are formed of copper or brass, deteriorated substances would not enter the molded product as in the case of the prior arts, making it possible to prevent mixing of foreign substances. This is assumed to be attributable to differences in catalyst action on molten resin or differences in an environment inside the apparatus (e.g., oxygen concentration) or the like.

In this way, according to the present embodiment, it is possible to mold an injection molded product made of PEEK without mixing of foreign substances and stably mold a desired PEEK molded product using the injection apparatus of the present embodiment.

### Industrial Applicability

The present invention can suppress generation of unmelted residues of resin pellets, provide a melter with excellent melting efficiency, and this melter can be incorporated into an injection apparatus. It is possible to obtain an injection molded product or an inter-member joining body with excellent quality using the injection apparatus of the present invention.

The present application is based on Japanese Patent Application No.2014-194922 filed on September 25, 2014, entire content of which is expressly incorporated by reference herein.

## Claims

1. A melter comprising a through hole,
wherein one opening of the through hole is an inflow port and the other opening is an outflow port,
an inner wall surface of the through hole is formed of an inclined surface so that the opening becomes narrower from the inflow port to the outflow port of the through hole, and
the opening width of the inflow port is 4.1 mm to 10 mm and the opening width of the outflow port is 1.0 mm to 4.5 mm.

2. The melter according to claim 1, wherein the opening width of the inflow port is 4. 1 mm to 6 mm and the opening width of the outflow port is 1.0 mm to 2.9 mm.

3. The melter according to claim 1 or 2, wherein a lower limit value of the opening width of the outflow port is 1.6 mm.

4. The melter according to any one of claims 1 to 3, wherein a length from the inflow port to the outflow port of the through hole is 30 mm to 200 mm.

5. The melter according to any one of claims 1 to 4, wherein a gentle inclined surface continuous to the inclined surface and more gently inclined than the inclined surface is formed on the inflow port side.

6. A melter comprising a through hole,
wherein one opening of the through hole is an inflow port and the other opening is an outflow port,
an inner wall surface of the through hole is formed of an inclined surface so that the opening becomes narrower from the inflow port from the outflow port of the through hole, and
an inclined surface continuous to the inclined surface and more gently inclined than the inclined surface is formed on the inflow port side.

7. The melter according to claim 5 or 6, wherein when the opening angle of the inclined surface is assumed to be θ1 and the opening angle of the gentle inclined surface is assumed to be θ2, a relationship of θ1<θ2Δ120° is satisfied.

8. The melter according to claim 7, wherein the θ2 is more preferably 30° to 120°.

9. The melter according to claim 7, wherein the θ2 is 30° to 90°.

10. The melter according to claim 7, wherein the 92 is 30° to 60°.

11. An injection apparatus comprising:
a cylinder;
the melter according to any one of claims 1 to 10 disposed in the cylinder;
a nozzle part disposed on the outflow port side of the melter;
heating means for heating the melter; and
pressurizing means for ejecting the injection material melted by the melter from the nozzle part to the outside.

12. The injection apparatus according to claim 11, wherein the injection apparatus is fully automatically operated.

13. An injection molded product formed using the injection apparatus according to claim 11 or 12.

14. The injection molded product according to claim 13, wherein the injection molded product is formed of resin selected from engineering plastic or super engineering plastic.

15. The injection molded product according to claim 14, wherein the injection molded product is molded using polyether ether ketone.

16. A method for manufacturing an injection molded product, wherein the injection molded product is formed using the injection apparatus according to claim 11 or 12.

17. A method for manufacturing an inter-member joining body, wherein the inter-member joining body is formed using the injection apparatus according to claim 11 or 12.
